(19) **Europäisches Patentamt / European Patent Office / Office européen des brevets**

(11) **EP 1 840 823 B1**

(12) **EUROPEAN PATENT SPECIFICATION**

(45) Date of publication and mention
of the grant of the patent:
**04.05.2011 Bulletin 2011/18**

(51) Int Cl.:
***G06T 5/00*** (2006.01)

(21) Application number: **06006855.8**

(22) Date of filing: **31.03.2006**

(54) **Method for discriminating textures regions and homogeneous or flat regions in an image**

Verfahren zur Unterscheidung der Texturbereiche und homogenen oder flachen Bereiche in einem Bild

Procédé de distinction de zones texturées et de zones homogènes ou plates dans une image

(84) Designated Contracting States:
**DE FR GB**

(43) Date of publication of application:
**03.10.2007 Bulletin 2007/40**

(73) Proprietor: **SONY DEUTSCHLAND GMBH**
**10785 Berlin (DE)**

(72) Inventors:
• **Incesu, Yalcin**
**70327 Stuttgart (DE)**
• **Sartor, Piergiorgio**
**70327 Stuttgart (DE)**
• **Dilly, Altfried**
**70327 Stuttgart (DE)**
• **Erdler, Oliver**
**70327 Stuttgart (DE)**

(74) Representative: **Müller - Hoffmann & Partner**
**Patentanwälte**
**Innere Wiener Strasse 17**
**81667 München (DE)**

(56) References cited:
**US-A1- 2004 120 597     US-B1- 6 771 793**

• STARCK J -L ET AL: "Automatic noise estimation from the multiresolution support" PUBLICATIONS OF THE ASTRONOMICAL SOCIETY OF THE PACIFIC UNIVERSITY OF CHICAGO PRESS FOR ASTRON. SOC. PACIFIC USA, vol. 110, no. 744, February 1998 (1998-02), pages 193-199, XP002390653 ISSN: 0004-6280
• MEER P ET AL: "A fast parallel algorithm for blind estimation of noise variance" IEEE TRANSACTIONS ON PATTERN ANALYSIS AND MACHINE INTELLIGENCE USA, vol. 12, no. 2, February 1990 (1990-02), pages 216-223, XP002390654 ISSN: 0162-8828
• AMER A ET AL: "Reliable and fast structure-oriented video noise estimation" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 September 2002 (2002-09-22), pages 840-843, XP010607455 ISBN: 0-7803-7622-6
• DONG-HYUK SHIN ET AL: "Block-based noise estimation using adaptive gaussian filtering" CONSUMER ELECTRONICS, 2005. ICCE. 2005 DIGEST OF TECHNICAL PAPERS. INTERNATIONAL CONFERENCE ON LAS VEGAS, NV, USA JAN. 8-12, 2005, PISCATAWAY, NJ, USA,IEEE, 8 January 2005 (2005-01-08), pages 263-264, XP010796632 ISBN: 0-7803-8838-0

**EP 1 840 823 B1**

**Description**

Field of the Invention

The invention relates to a method for discriminating texture regions and homogeneous or flat regions in an image. More specifically, the present invention relates to a method for determining textured and flat regions in a picture under noisy conditions.

Background of the Invention

In many applications and customer devices, before displaying images, pictures, or frames the underlying images, frames, or pictures and the respective data have been pre-processed in order to better adapt the image properties, and the like. One aspect is the enhancement of sharpness of the image, picture, or frame. A problem when enhancing the sharpness of an image or with respect to other pre-processing steps is that the respective process is in general applied to all image details represented by the image data. However, some of the image details indeed originate from noise components which are also contained in the image and the image data. Under a process of e. g. sharpness enhancement, also respective noise components contained in the image data will be enhanced and therefore will be amplified.
It is therefore necessary to know in advance, i. e. before pre-processing image data, to know something about the general noise level in the respective image, in particular with respect to homogeneous and textured regions of the image.
The publication "Automatic noise estimation from the multi resolution support". Publications of the Astronomical Society of the Pacific University of Chicago. Vol. 110. No. 744. February 1998, pages 193-199, discloses an automated approach for determining noise associated with images based on a multi resolution transform of a given image by using a wavelet transformations. On different scales noise standard deviations are estimated.
The publication "A fast parallel algorithm for blind estimation of noise variance". IEEE Transactions on Pattern Analysis and Meshing Intelligence, Vol. 12, No. 2, February 1990, pages 216-223. discloses an algorithm for recovering the variance of noise in images by using a two step procedure, wherein firstly sample variances are compute for square cells tessellating an image with given noise. Then, the four smallest sample variance values are retained for each tessellation and are combined to an outlier analysis into one estimate.
US 6.771.793 B1 defines an image processing method and apparatus, wherein in a band-limited image of a frequency band lower than a certain frequency band a pixel vector correcting means is operated such that, in cases where it is judged that a pixel vector at a pixel of interest has to be corrected, the pixel vector at the pixel of interest is corrected in accordance with the pixel vector at the pixel, which corresponds to the pixel of interest. A processed image is thereby obtained in accordance with processed band-limited image signals wherein the pixel vector represents a direction and a magnitude of inclination of pixel values of the pixel of interest in relation to a neighboring pixel.
The publication "Reliable and fast structure-oriented video noise estimation". Proceedings 2002. International Conference on Image Processing, 22.-25. September 2002. Vol. 2/3. pages 840-843. gives an Introduction with respect to fast automated white-noise estimation methods which give reliable estimates in images with smooth and textured areas. Based on blocks the image structure is taken into account and other measures than the variance is used in order to determine if a block is homogeneous.
The publication "Block-based noise estimation using adaptive Gaussian filtering". International Conference on Las Vegas. 8.-12. January 2005, pages 263-264. proposes a fast noise estimation algorithm employing a Gaussian pre-filter. Coefficients of the Gaussian filter are selected according to a standard deviation of Gaussian noise estimated from a noisy input image. The standard deviation is estimated from the difference image between the noise input image and its filtered image.
US 2004/0120597 A1 discloses an apparatus and a method for adaptive spatial segmentation-based noise reducing for encoded image signals, wherein an efficient and non-iterative pulse processing method and system are proposed for noise reduction in DCT block based decoded images. A classification of segments of a picture in multiple regions such as edge, near edge, flat, near flat and texture regions is used.

Summary of the Invention

It is therefore an object of the present invention to provide a method for discriminating textured regions or texture regions and homogeneous or flat regions in an image which is capable of providing in a simple manner information about the distribution and the location of textured regions and of homogeneous or flat regions in an image.
The object is achieved by methods for discriminating texture regions and homogeneous or flat regions in an image according to independent claims 1 and in addition by a system, apparatus or device, by a computer program product, and by a computer readable storage medium according to claims 16, 17, 18, respectively.

The invention is defined in appended claims.

Brief Description of the Drawings

The invention will now be explained based on preferred embodiments thereof and by taking reference to the accompanying and schematical figures.

| | |
|---|---|
| **Fig. 1** | is a schematic block diagram for elucidating basic principles underlying preferred embodiments of the present invention. |
| **Fig. 2** | is a schematic block diagram for elucidating a possible application of an embodiment of the present invention. |
| **Fig. 3** | is a schematic block diagram for elucidating in more detail some aspects underlying an embodiment of the present invention. |
| **Fig. 4** | is a schematic block diagram for elucidating aspects of a global variance level candidate generation process underlying an embodiment of the present invention. |
| **Fig. 5** | is a schematic diagram for elucidating a possible sub-sampling array or arrangement underlying an embodiment of the present invention. |
| **Fig. 6** | is a schematic block diagram for elucidating a global variance level selection process underlying an embodiment of the present invention. |
| **Fig. 7** | is a schematic block diagram for elucidating a global variance level to global variance threshold conversion process underlying an embodiment of the present invention. |
| **Fig. 8** | is a schematic block diagram for elucidating a local variance determination process underlying an embodiment of the present invention. |
| **Fig. 9** | is a schematic block diagram for elucidating a flat/homogeneous texture discrimination process underlying an embodiment of the present invention. |
| **Fig. 10** | is a schematic block diagram for elucidating a flat texture cleaning process underlying an embodiment of the present invention. |
| **Fig. 11A, 11B** | are schematic block diagrams for elucidating the structure of a possible arrangement process underlying an embodiment of the present invention. |
| **Fig. 12, 13** | are schematic block diagrams for elucidating a possible structure for a flat texture smoothing process underlying an embodiment of the present invention. |
| **Fig. 14** | is a schematic block diagram for elucidating a flat/homogeneous texture noise level scale process underlying an embodiment of the present invention. |
| **Fig. 15** | is a graphical representation for elucidating a possible scaling transfer function and might be used in an embodiment of a flat/homogeneous noise level scaling process as shown in Fig. 14. |
| **Fig. 16** | is a graphical representation for elucidating offset properties in a possible flat/homogeneous noise level scaling process underlying an embodiment of the present invention as shown in Fig. 14. |
| **Fig. 17** | is a schematic block diagram for elucidating a flat/homogeneous texture final linear scaling process underlying an embodiment of the present invention. |
| **Fig. 18** | is a tabular for elucidating a list of registers which might be used in an embodiment of the present invention and an implementation thereof. |

Detailed description of the Invention

In the following functional and structural similar or equivalent element structures will be denoted with the same reference symbols. Not in each case of their occurrence a detailed description will be repeated.

According to a first aspect of the present invention a method for discriminating texture regions and homogeneous or flat regions in an image is provided, wherein a multi-scale or multi-resolution measurement is performed in or with respect to said image.

Said image may be analyzed by using a prior measured noise value and a local variance value in or with respect to said image.

According to a second aspect of the present invention a method for discriminating texture regions and homogeneous or flat regions in an image is provided, wherein said image may analyzed by using a prior measured noise value and a local variance value in or with respect to said image.

A multi-scale or multi-resolution measurement may be performed in or with respect to said image.

Said multi-scale measurement or said multi-resolution measurement may be performed in order to obtain a real noise level or real noise level value, in particular as a variance value for said image.

An image region of said image may be classified as textured if a variance value or local variance value exceeds a given threshold value.

An image region of said image may be classified as homogeneous or flat if a variance value or a local variance value is below or equals a given threshold value.

A noise variance value - in particular said prior measured variance value - or a derivative thereof may be used as said threshold value.

Homogeneous-texture discrimination data may be generated and provided, which are descriptive and discriminating textured image regions and homogeneous or flat image regions in said image, wherein said homogeneous-texture discrimination data are in particular given as a homogeneous-texture discrimination map.

The inventive method may comprise a global variance level calculating process, wherein blocks of said image are defined as image regions and assigned to a respective certain class of blocks, wherein for each class of blocks of said image a sub-variance value is determined, wherein an overall variance value for said image is determined, and wherein said sub-variance values for said classes of blocks of said image and said overall variance value for said image are taken as variance value candidates for describing the noise level or global noise level of said image.

The inventive method may comprise a global variance selection process, wherein from said variance value candidates one value is selected for describing the noise level or the global noise level of said image, in particular according to given selection criteria.

An adaptive median filter process may be used to realize said selection criteria.

A temporal filtering process may be applied to said selected global noise level value, in particular to temporally stabilize said global noise level value for said image.

A IIR filtering process may be used within said or as said temporal filtering process.

For analyzing said image, said image may be subdivided into blocks as image regions which are essentially centrally located around a respective pixel within said image.

Each block, each pixel in said image or block and/or classes thereof may get assigned a respective local variance value.

Based on pixels within said image local variance values assigned to each of said pixels are compared against said global variance value.

Said generated homogeneous-texture discrimination data and in particular said homogeneous-texture discrimination map may be cleaned in order to improve its homogeneity to thereby avoid side effects.

In said cleaning process small spots within homogeneous sections may be removed.

The inventive method may comprise a homogeneous-texture smoothing process with respect to said homogeneous-texture discrimination data, which is adapted and performed in order to smoothen transitions in said homogeneous-texture discrimination data.

A vertical IIR filter may be used for said or in said homogeneous-texture smoothing process.

A low pass filtering process is used in or for said homogeneous-texture smoothing process.

The inventive method may comprise a homogeneous-texture noise level scale process.

The inventive method may comprise a homogeneous-texture linear scale process, in order to provide optimization parameters.

According to a further aspect of the present invention a system, apparatus or device for discriminating texture regions and homogeneous regions in an image are provided, which are adapted and which comprises means for carrying out a method for discriminating textured regions and homogeneous regions in an image according to the present invention and the steps thereof.

According to a further aspect of the present invention a computer program product is provided, comprising a computer program means which is arranged and adapted in order to perform and realize a method for discriminating texture regions and homogeneous regions in an image according to the present invention and the steps thereof when it is executed on a computer or a digital signal processing means.

According to a still further aspect of the present invention a computer readable storage medium is provided which comprises a computer program product according to the present invention.

These and further aspects of the present invention will be further discussed in the following:

The present invention inter alia also relates to a method to determine and discriminate textured and flat regions within an image, frame, or picture under noisy conditions.

The problem to be solved is to provide a reliable method to distinguish in images, frames, or pictures textured areas from flat areas under noise free conditions and under noisy conditions. Such information can be used in different image, frame, or picture improvement application like noise reduction, sharpness enhancement or any other.

The problem of distinguishing texture from homogenous areas under noisy conditions is, that the noise can make the homogonous area also look like texture. Depending on the decision criteria, such areas cannot be distinguished any more reliably.

In the following a first and short overview over several aspects of the present invention is given.

Short Overview

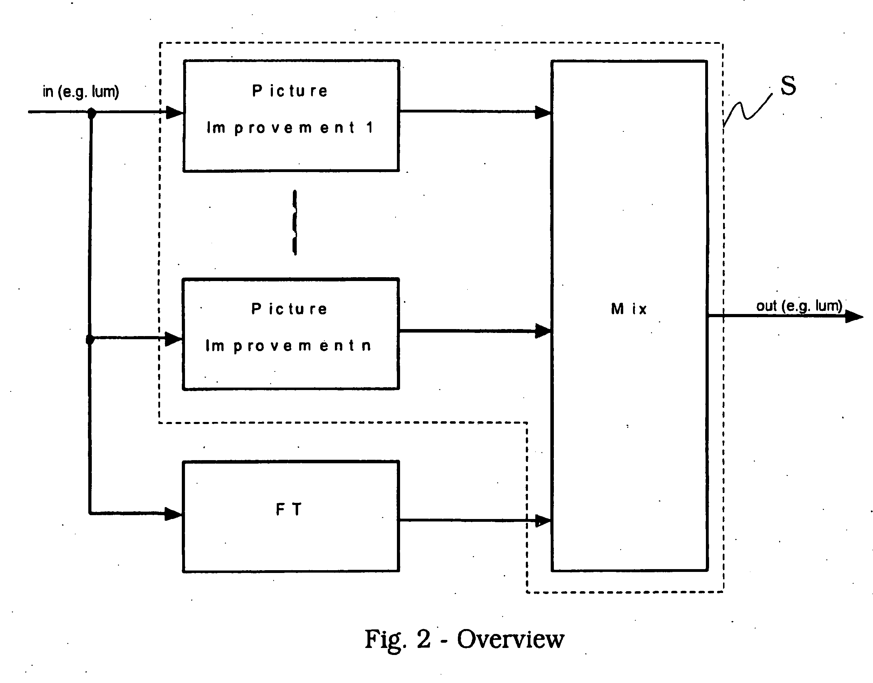

In the current embodiment, the Flat Texture (FT) process or algorithm is used in combination with a sharpness enhancement process or algorithm. The block S in Fig.2 is the actual controlling block of this sharpness enhancement process or algorithm by means of utilizing the FT information. The target is to lower the enhancement factor of the sharpness enhancement process or algorithm in case of noise in homogenous areas in order to avoid an unwanted enhancement of noise in this areas. In textured regions, the sharpness enhancement level can be kept even under noisy conditions because the noise is masked by the human eye.

In the case of Fig. 2 the processing does not necessarily have to work on luminance lum, this is just the one appropriate embodiment here. It could work also on RGB or other domains where three separate processes are done and at the end combined or the like.

Of course it can be used in combination with other picture processing system like noise reduction , where a different configuration could be used in case of texture and homogenous areas.

Another possibility is to also in case of texture synthesis or scaling methods.

In the following a overview over some basic aspects of an embodiment of the present invention is given:

gvlCandidates - global variance level calculation

This block or process comprises a noise measurement method, which provides the global noise level independent if the picture content contains texture or noise. This can be reached by using a multi scale measurement approach, where for a given block, four sub-variances and one overall variance is calculated. This utilizes the fact, that (Gaussian) noise is independent from the spatial position and texture (to some extend) is not. Therefore, that sub-variances should change in case of texture and they should stay similar in case of homogenous regions even in case of noisy condition. The determination of the global noise level is crucial for the system. This block outputs 5 candidates for the global variance level.

gvlSelect - global variance selection

This block or process is adapted to select the best suitable global variance level from the five candidates. The method, which is actually used in our embodiment is called adaptive median.

The advantage of this adaptive median method is, that in cases where almost the whole picture is consisting of texture and only a very small region has homogenous content, the noise level will be taken from this homogenous region, although it is not the median value in the candidate list. This helped to solve some problematic cases where despite the multi-scale approach, the candidates have been wide spread in the value range. It improves the reliability of the GVL vale.

gvl2Gvt - global variance level to global variance threshold

This block or process provides a temporal filtering of the GVL value in order to avoid temporal side effects like pumping. It stabilizes the GVL value by means of a IIR filter. The second task is to apply some offset and gain parameters for final adjustment of the algorithm in the real-time system.

local variance

This block or process is adapted to calculates the variance of block centrally located around an actual pixel. Each pixel in the picture gets an variance value assigned in this way.

ftDiscriminate - flat texture discriminate

This block or process is adapted to compare pixel by pixel the above mentioned local variance value against the GVT.

ftCleaning - flat texture cleaning

This block or process is adapted to clean the binary flat vs. texture map to improve the homogeneity of the map, which avoids side effects. It removes small spots which are flagged as texture within a homogenous region and vice versa. Especially small areas indicated as texture within a homogenous area can lead to visible distortions for the viewer.
The erosion fits the area, which is masked as texture better the real object / region border. There is some overlap of the texture mask compared to the actual textured region in the picture due to the mask size of the local variance operator. The local variance of pixel which are still in a homogenous region but near a textured area is already increased because the mask for calculating the local variance covers already some texture pixel or pixel from another characteristic than the actual one. The erosion process is a countermeasure for this issue.

ftSmoothing - flat texture smoothing

This block or process is adapted to smoothen the transitions in the binary flat vs. texture map. This is also necessary to avoid side effects for the viewer because a steep transition or binary switching of the sharpness enhancement or any other method is visible to the human eye as error. The vertical IIR filter was chosen to save implementation resources and to achieve a strong filtering also in vertical direction.
The strong low pass filtering further attenuates also the enhancement of small textured areas within a homogenous region which is of advantage for the image impression.

ftNlScale - flat texture Noiselevel Scale

This block or process is adapted to guarantee a certain adaptivity to the overall noise level for the complete system. This means that if very strong noise is apparent in the picture, the textured region should be gradually, with increasing noise level, be also set to "no texture". This means in our embodiment that the sharpness enhancement is gradually completely switched off also for textured areas for very strong noise.

ftMapScale - flat texture linear scale

This block or process is adapted to provide some optimization parameters for the algorithm chain the real-time system and is not mandatory.
In the following a more detailed overview over several aspects of the present invention is given. The following passages give therefore a more detailed explanation of the flat vs. texture video analysis component and of the underlying methods and algorithms and related implementation notes:

Overview

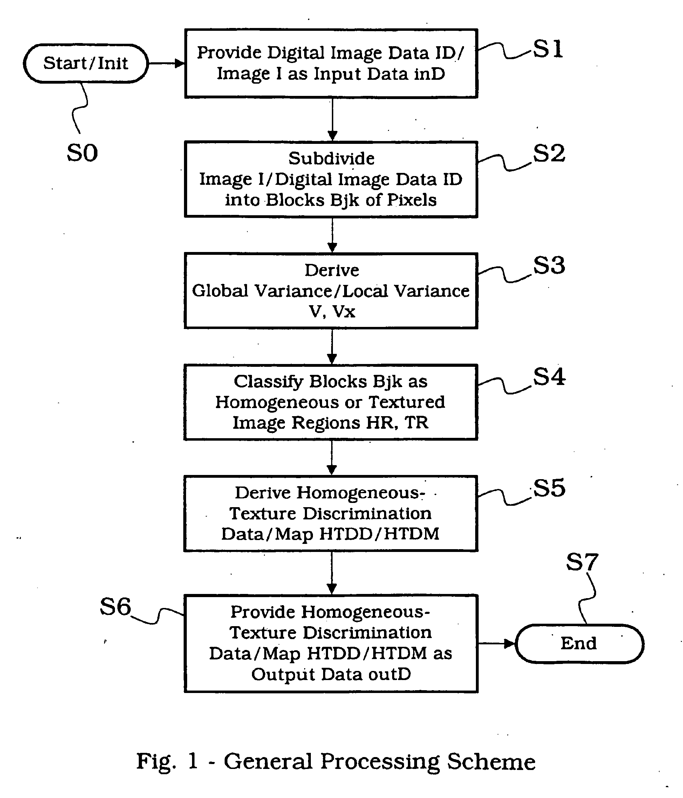

Fig. 1 is a schematic flow chart for elucidating some aspects of an embodiment of the method for discriminating texture regions TR and homogeneous or flat regions HR in an image I according to the present invention.
After an initialisation step S0, in a first processing section S1 digital image data ID or a derivative thereof - e.g. the luminance part - or even an image, frame or picture I as such are provided as input data inD.

In a second processing section S2 said digital image data ID, said derivative thereof - in particular said luminance part - or even said image I as such are subdivided into blocks Bjk of image elements or pixels.

Then in a third processing section S3 a global variance or global variance value V as well as local variances or local variance values Vx with respect to said blocks Bjk or classes Cx thereof are derived. From these global and classes of local variances an estimate for the noise level or noise level value NV for the image, frame or picture I is derived.

In a fourth processing section S4 from said noise level or said noise level value NV image regions - e.g. said blocks Bjk - are locally classified as being textured - i.e. being an textured image region TR - or as being homogenous or flat - i.e. being a homogeneous image region HR.

From said classification homogeneous-texture discrimination data HTDD - e.g. a homogeneous-texture discrimination map HTDM - are derived in a following fifth processing section S5 and then output as output data outD in a sixth processing section S6.

The flat/homogeneous vs. texture image/picture analysis component or HT or FT image/picture analysis component differentiates flat from texture regions within an image, frame and/or video picture. The target for this algorithm is to deliver a map to a image/picture enhancement block, e.g. block S in Fig. 2, which uses this information to control the level of enhancement within these different image/picture regions. Fig. 2 describes this use case. In the case of a noisy input, this map helps to avoid the enhancement of noise in homogeneous or flat image/picture regions.

Register list

The HT or FT block or process depicted in the block diagram of Fig. 2 comes with a register list as shown in Fig. 19. A detailed description is given in the following sections.

Functional description of the Homogeneous/ Flat vs. Texture Block/Process

Block Diagram

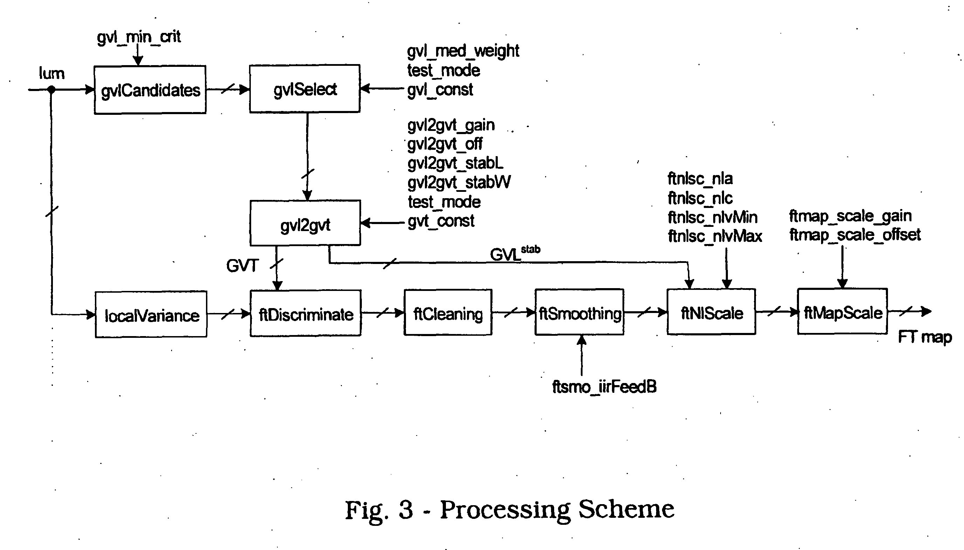

Fig. 3 gives an overview about the functional components which are incorporated in the reference model for the homogeneous/flat vs. texture algorithm.

This block diagram shows the software implemented reference model from a logical point of view. A hardware implementation may collapse some blocks like all gvlXxx blocks or the localVariance and the ftDiscriminate block. The parameters for all connection lines are taken from the fixed point reference model.

Parameters which are applied to the system from outside are depicted with a separate input arrow to the respective blocks.

The following sections describe each functional block by its input, output, processing steps or algorithm and some related notes for implementation.

Global Variance Level Candidate Generation - gvlCandidates

| | |
|---|---|
| Input: | Input luminance image/picture lum |
| Parameters: | gvl_min_crit |
| Output: | Array of 5 minimum variance values $\sigma tot[i]$, i = {1..5} |

Process / Algorithm:

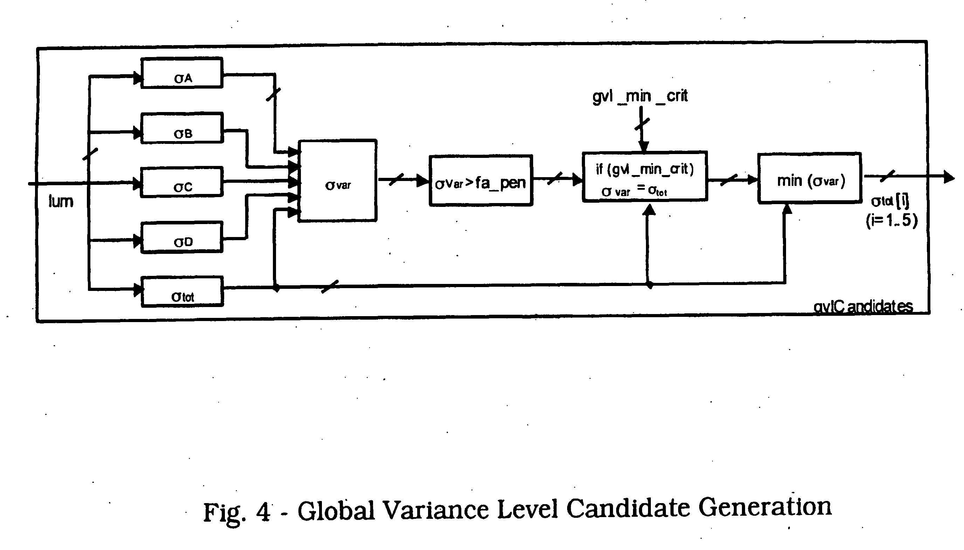

The block diagram of Fig. 4 describes the gvlCandidates process/block.

The gvlCandidates process block calculates 5 global variance level (GVL) candidates with the following method:

1. Subdivide the picture into blocks B(x,y).

2. Calculate for each block B(x,y) the following values:

| | | |
|---|---|---|
| a. | $\sigma tot$: | variance for all pixel in B(x,y) |
| b. | $\sigma A, B, C, D$: | variance for all pixel on the sub-sampling raster A,B,C,D (see drawing of Fig. 5) |
| c. | $\sigma var$: | variance of variances $\sigma A, B, C, D, tot$ |

3. Compare $\sigma var$ to the constant value fa_pen, which is a flat area penalty. If $\sigma var <$ fa_pan, the $\sigma var$ value is discarded

and not considered in the following minimum determination because it is 'too flat' and may stem from a black bar. If $\sigma$var > fa_pan, the $\sigma$var is considered as valid and used for further processing.

4. In case that flag gvl_min_crit is enabled, $\sigma$tot is assigned to $\sigma$var. With this you disable the multi-scale NM and enable the global minimum block variance search for determining the final GVL value.

5. Find the minimum values $\sigma$var for all blocks and store them together with their accompanying value $\sigma$tot for the respective block B(x,y).

6. Output these five minimum $\sigma$tot[i], i = {1..5} to the gvlSelect module.

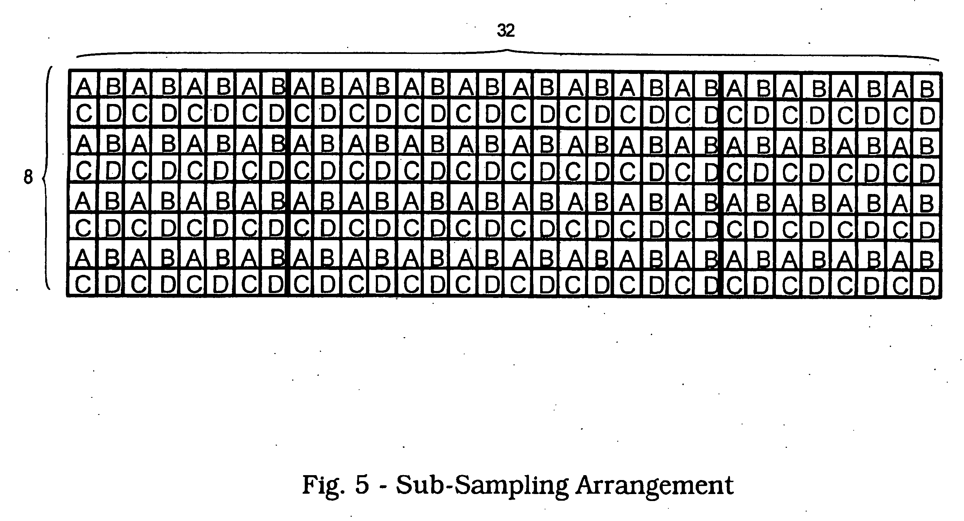

The sub-sampling arrangement or raster mentioned in itemt 2.c for a block B(x,y) above is described in Fig. 5.

Two different methods to calculate the variance are analyzed as follows:

1. $\sigma = 1/N * \Sigma(x(i) - \mu)^2$, for all x(i) in B(x,y), where N is the number of pel in B(x,y) and $\mu$ describes the pixel average in B(x,y). We usually refer to this value as "normal variance".

2. $\sigma = 1/N * \Sigma| x(i) - \mu |$, which describes a variance based on the absolute value of the difference between the actual sample and the average in B(x,y). This is usually referred to as "simple variance".

Investigations show that it is possible to use both types of variance calculation for our purposes. However, it was decided to use the normal variance because it is more advantageous in terms of resource usage.

Implementation notes:

1. There is no specific border processing since the measurement blocks are placed only inside the active picture area.

2. Blocks which are not fully fitting into the active picture area are discarded.

3. For implementation we use the GVL of the previous frame for the actual picture in order to avoid a full frame delay. For the time instance t=0 the first GVL value is set to GVL(t=0) = 0.

4. The bit-width for all different signals is taken from the katv_FT fixed point model. All primary variances $\sigma$A, B, C, D, tot are 18 bit.

5. The flat area penalty fa_pen is set per define to 0.02 and is used to discard measurements in black bars.

Global Variance Level Selection - gvlSelect

| Input: | Array of variance values $\sigma$tot[i], i = {1..5} |
| Parameters: | gvl_med_weight, test_mode, gvl_const |
| Output: | Global Variance Level (GVL) |

Process / Algorithm:

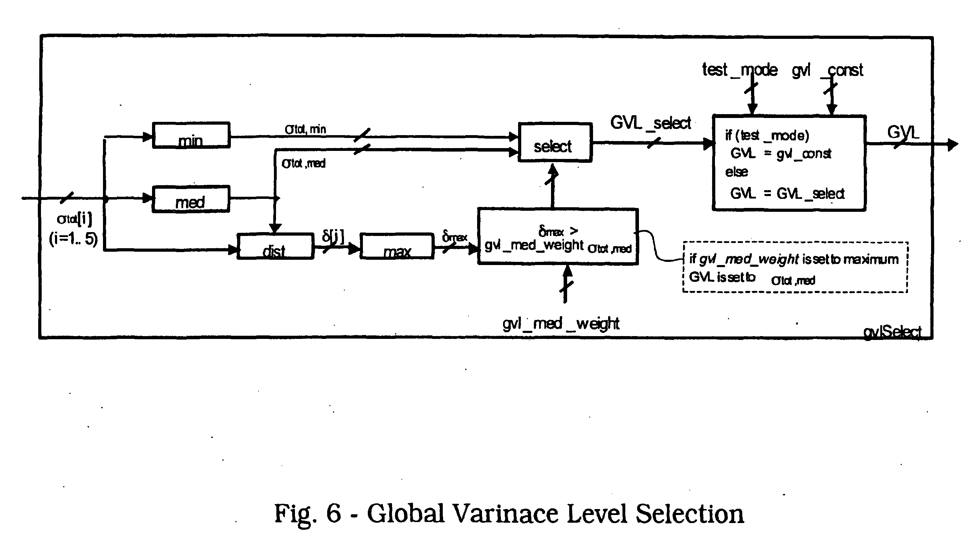

Fig. 6 shows the structure of the gvl2Select module. A basic principle of this process/block is to calculate some selection criteria on the 5 values $\sigma$tot [i] and to pass the selected value $\sigma$tot, which is named GVL, to the output. Different methods have been investigated for the selection process like min($\sigma$tot [i]) or med($\sigma$tot [i]).

The method which is currently performing best is called adaptive median. This works like follows (refer to Fig. 6):

1. Calculate the minimum $\sigma$tot,min = min ($\sigma$tot [i]).

2. Calculate the median $\sigma$tot,med = med ($\sigma$tot [i]).

3. Calculate the distance $\delta$ [i] for each $\sigma$tot [i] to $\sigma$tot,med. The distance criterion is based on the absolute difference: $\delta[i]$ = dist ($\sigma$tot [i], $\sigma$tot,med) = $\Sigma_{i=1...5}$ |$\sigma$tot [i] - $\sigma$tot,med|.

4. Determine the maxium from all distances $\delta[i]$: $\delta$max = max($\delta[i]$).

5. A binary decision is taken from $\delta$max > gvl_med_weight · $\sigma$tot,med. If this condition is true (1) the result will be σtot,min, otherwise the output will be σtot,med (see below notes for information on gvl_med_weight). If gvl_med_weight is set to its maximum possible value, GVL is chosen to be σtot,med. By this it is possible to switch with the help of gvl_med_weight between σtot,min and σtot,med.

Implementation notes:

- The gvl_med_weight value is a register parameter with 10 bits. In the full precision reference implementation, it is set by default to $\alpha$ = 0.2 (fix-point model: 0.1875).
- For testing the FT algorithm, a test mode has been introduced by using the parameters test_mode & gvl_const. In case that test_mode is enabled the constant value gvl_const is set as output of this block.

<u>Global Variance Level to Global Variance Threshold Conversion - gvl2gvt</u>

| | |
|---|---|
| Input: | Global Variance Level - GVL |
| Parameters: | gvl2gvt_stabL ... stabilization length, length of IIR filter |
| | gvl2gvt_stabW ... stabilization weight |
| | gvl2gvt_gain ... multiplication factor |
| | gvl2gvt_offset ... offset value |
| | test_mode ... FT test mode flag |
| | gvt_const ... GVT value used in the FT test mode |
| Output: | Global Variance Threshold GVT |
| | Stabilized Global Variance Threshold GVLstab |

Process / Algorithm:

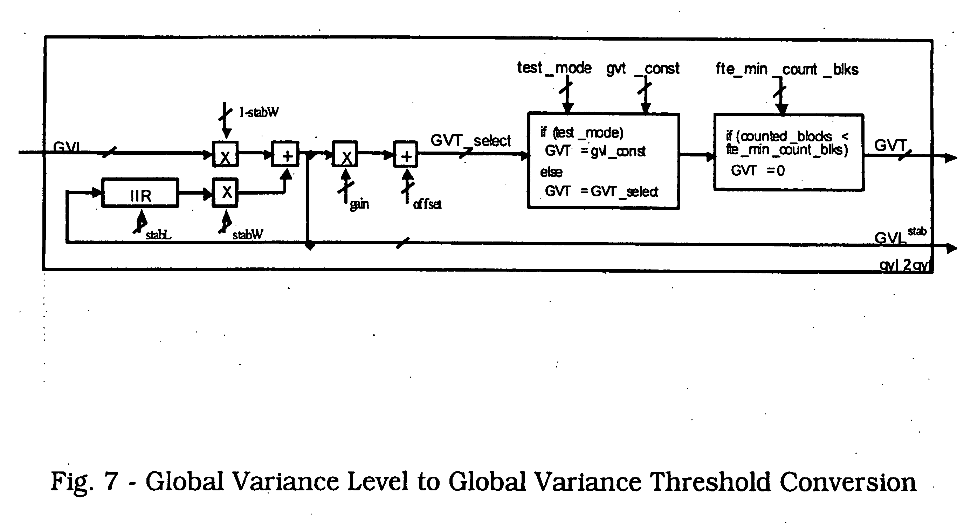

The basic objective for this process/block is to stabilize the GVL and to apply the tuning parameters to it in order to output the GVT. The stabilization is realized by an IIR filter. The block diagram of Fig. 7 describes the process flow.
The processing works as follows:

1. Calculate the stabilized global variance level as GVLstab = gvl2gvt_stabW · GVLstab[i] + (1- gvl2gvt_stabW) - GVL, where GVLstab[i] describes an array with gvl2gvt_stabL elements of the last stabilized GVLstabs and where GVL describes the actual incoming value. GVLstab[i] is depicted in the above drawing as IIR block.

2. Update GVLstab[i] (IIR) for the next iteration.

3. Calculate the global variance threshold as GVT = gvl2gvt_gain · GVLstab + gvl2gvt_offset.

4. In case the amount of counted blocks (in actual region of interest) is smaller than the register value fte_min_count_blks the GVT value is set to 0. By default the value is set to 150, which represent 1/3 * 1/3 SD.

5. Output GVT and GVLstab.

Implementation notes:

1. During the run-in of the process, the averaging process is only carried out over valid values in the FIFO, which means the full length is considered after gvl2gvt_stabL frames (gvl2gvt_stabL subsequent GVL inputs).

2. The parameter gvl2gvt_stabL maps to the IIR filter length as follows:

- gvl2gvt_stabL = 0 ==> IIR -Filter length = 1 Tap
- gvl2gvt_stabL = 1 ==> IIR -Filter length = 2 Taps
- gvl2gvt_stabL = 2,3 ==> IIR -Filter length = 4 Taps

The default value is set to gvl2gvt_stabL = 2.

3. Similar to the gvlSelect block, this block features alsoa test mode enabled and defined by the parameters test_mode & gvt_const. In case that the test_mode is enabled the constant value gvt_const is set as output of this block.

Local Variance Determination - localVariance

| Input: | Luminance picture lum |
|---|---|
| Parameters: | None |
| Output: | Local variance σloc |

Process / Algorithm:

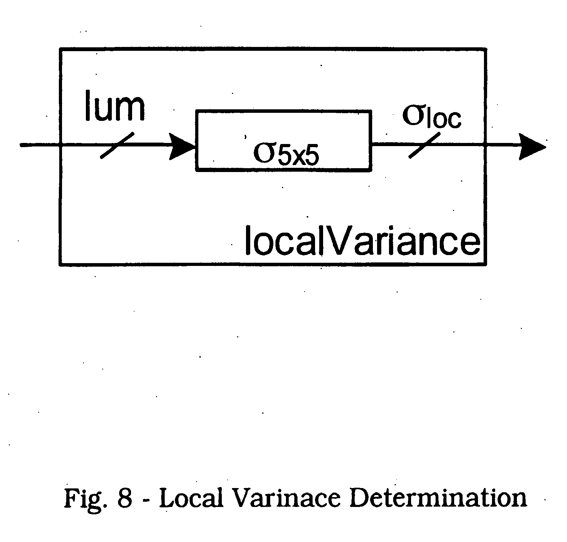

This process/block is adapted to calculate the variance within a 5x5 block, centrally located around the actual position, as is shown in Fig. 8.

The process/algorithm can be described as follows.

1. Load all pixels in a 5x5 block around the actual pixel.

2. Calculate the local variance σloc over all pixels in the block with the same method as for the GVL, the "normal" variance formula.

3. Output the σloc and proceed to the next position.

Implementation note: The border handling is implemented with pixel repetition.

Homogeneous/Flat Texture discriminate - ftDiscriminate

| Input: | Local variance level σloc |
|---|---|
| | GVT |
| Parameters: | None |
| Output: | Flat vs. texture map: ftmap |

Process / Algorithm:

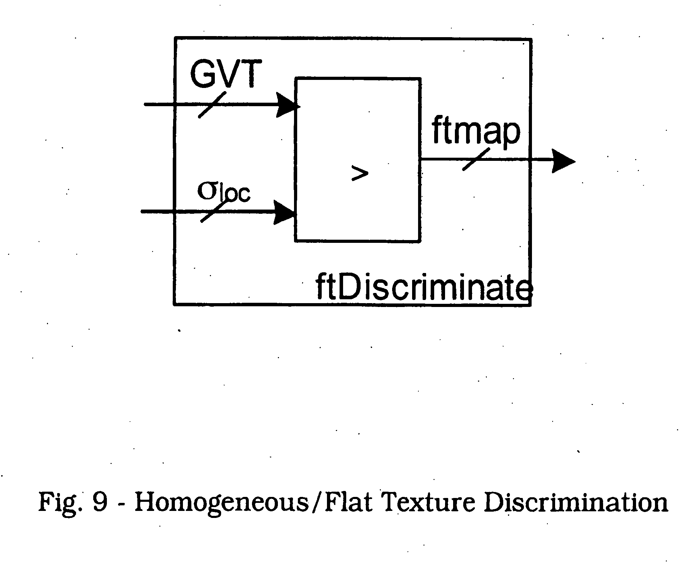

This process/functional block does the actual discrimination between homogeneous/flat and textured area by comparing the local variance value to the GVT value as described Fig. 9.

The process/algorithm behind this block is very simple:

Compare each σloc to the GVT and write a binary decision value to the output.

Implementation notes: No special considerations. This block may be collapsed (in hardware design this has been considered already) with others in a final implementation. It's separate in the simulation model for ease of use and analysis.

Homogeneous/Flat Texture Cleaning - ftCleaning

| Input: | Flat vs. texture map: ftmap |
|---|---|
| Parameters: | None |
| Output: | Cleaned flat vs. texture map: ftmapcl |

Process / Algorithm:

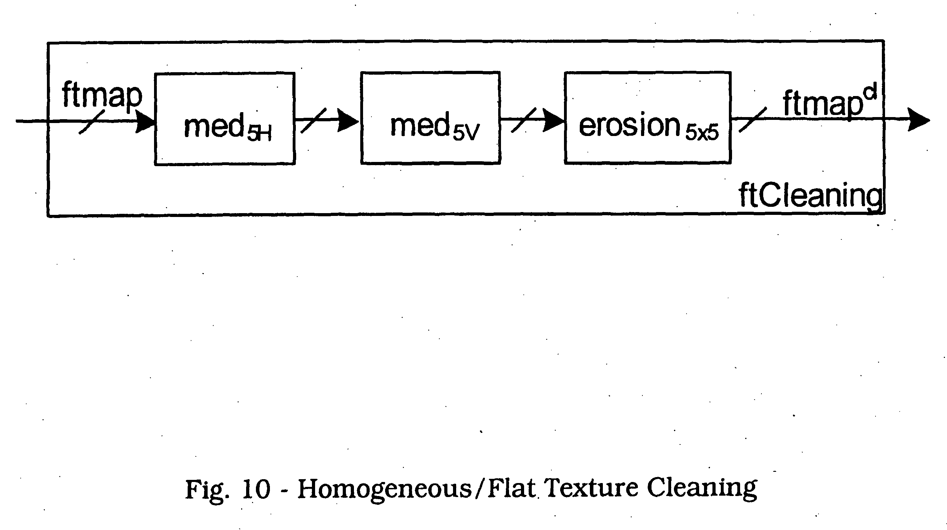

The cleaning step is intended to improve the homogeneity of the FT map and to remove spurious errors. The cleaning block comprises two median filters and one erosion step as depicted in the block diagram of Fig. 10.

All applied filter methods are regular text book methods. The algorithm can be described as follows:

1. Apply a 5 tap median in horizontal direction centrally located around the actual pixel.

2. Apply a 5 tap median filter in vertical direction, centrally located around the actual pixel. The input to this filter step is pre-processed by the previous hor. median step.

3. Apply on the horizontally and vertically median filtered map an erosion process with a squared 5x5 structure element.

4. Output the cleaned FT map values.

Implementation notes:

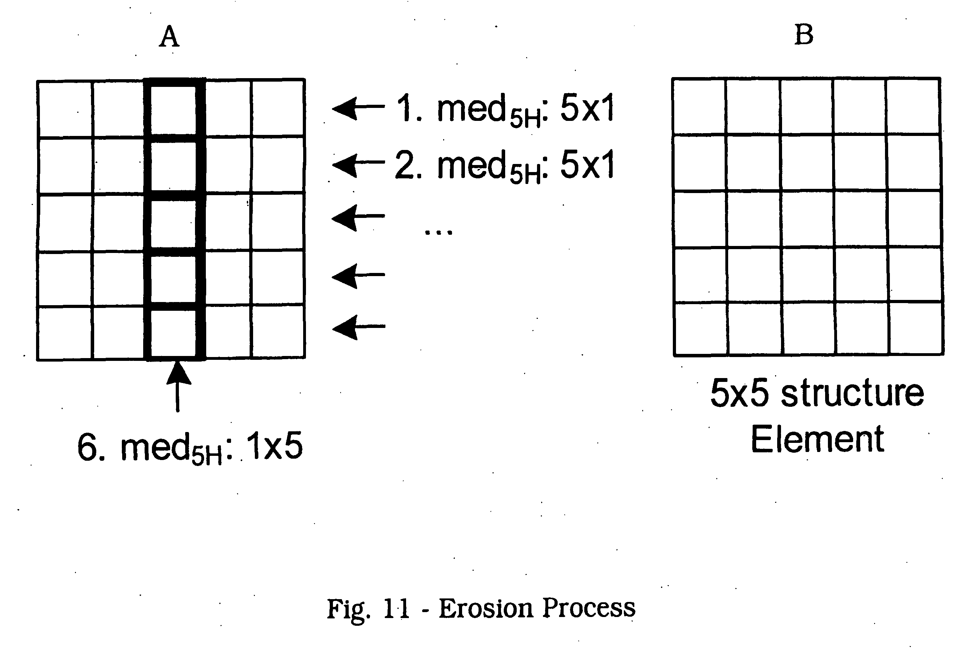

1. Figs. 11A, 11B give some hint to the current software implementation. The filter mask for the median filtering is shown in the left picture of both. The central column of the 5x5 mask is the input to the vertical 5-tap median filter. Each of the values of this vertical mask are first horizontally median filtered by a 5-tap median, which is depicted with the horizontal extension. The numbering in front of the median operators gives some hint to the order of processing.
The right picture shows the 5x5 structure element for the erosion process.
Since we have only 1 bit values, all the rank order filters in this block can be implemented by simple counters.
2. The border handling is done by pixel repetition.

Homogeneous/ Flat Texture Smoothing- ftSmoothing

| Input: | FT map |
|---|---|
| Parameters: | ftsmo_iirFeedB |
| Output: | Horizontally and vertically smoothed FT map: ftmapHV |

Process / Algorithm:

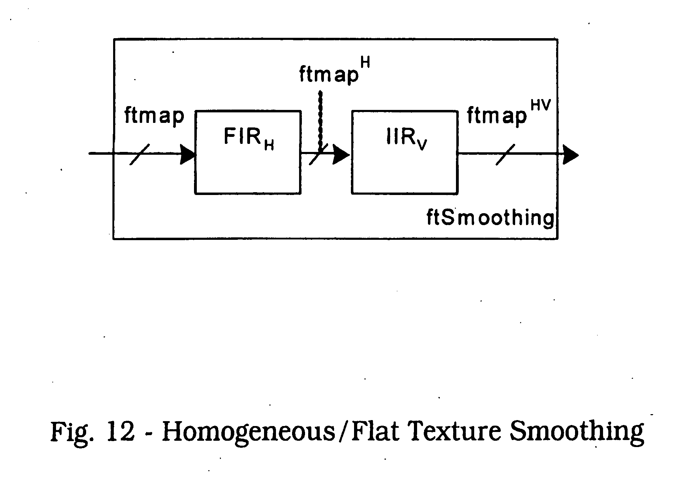

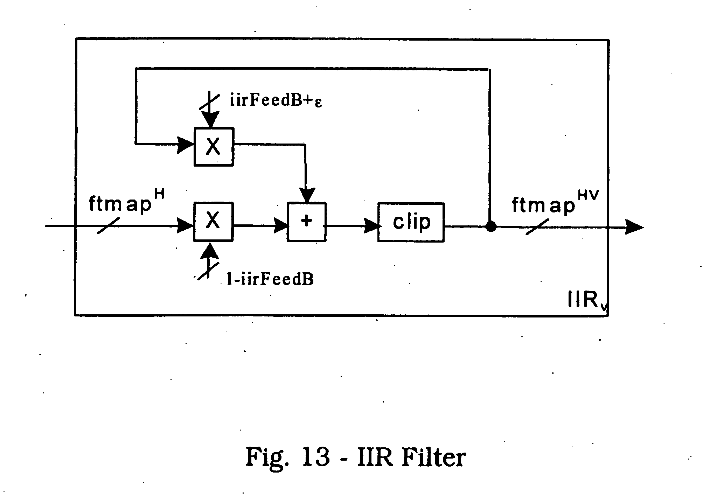

This process/block is intended to smooth out the transitions between flat and texture area in the FT map, which is crucial for the final picture quality because this reduces side effects. Different methods have been investigated. Figs. 12 and 13 describe the sub-components of the ftSmoothing process/block.

The process algorithm works specifically as follows:

1. Apply a horizontal filter to the incoming binary FT map. The hor. filter applies a averaging over 17 taps centrally located around the actual one and outputs the result as ftmapH to the vertical smoothing filter.

2. The vertical filter is implemented as 2-tap IIR filter with the ftsmo_iirFeedB+$\varepsilon$ parameter as weight for the feedback path. $\varepsilon$ is called "feedback disturbance" and was introduced because the ftmap output does not reach the maximum valued 255 without this small offset. The $\varepsilon$ value is currently set to 0.001.

3. To avoid overflow, a clipping block is introduced, which limits the map between 0 and 255.

4. The output is ftmapHV.

Implementation notes:

1. All border processing is done with pixel repetition.
2. Also a vertical 5-tap FIR filter has been investigated, which may be integrated with the horizontal IIR filter to a squared 17x5 mask for averaging. This may be an alternative to the IIR filter, which has an 8 bit input signal at the input and therefore is more expensive. However the 2-tap IIR is preferable because it delivers a stronger smoothing.

Homogeneous/Flat Texture Noise Level Scale - ftN1Scale

| Input: | Smoothed flat vs texture map ftmapHV |
| | $GVL^{stab}$ - Stabilized global variance level as noise level |
| Parameters: | ftnlsc_nla - Noise level acceptance threshold |
| | ftnlsc_nlc - Noise level cut off threshold |
| | ftnlsc_nv_min - Minimum valid noise level |
| | ftnlsc_nv_max - Maximum valid noise level |
| Output: | Noise adaptive scaled flat vs. texture map $ftmap\_nlsc^{out}$ to the enhancer component. |

Process / Algorithm:

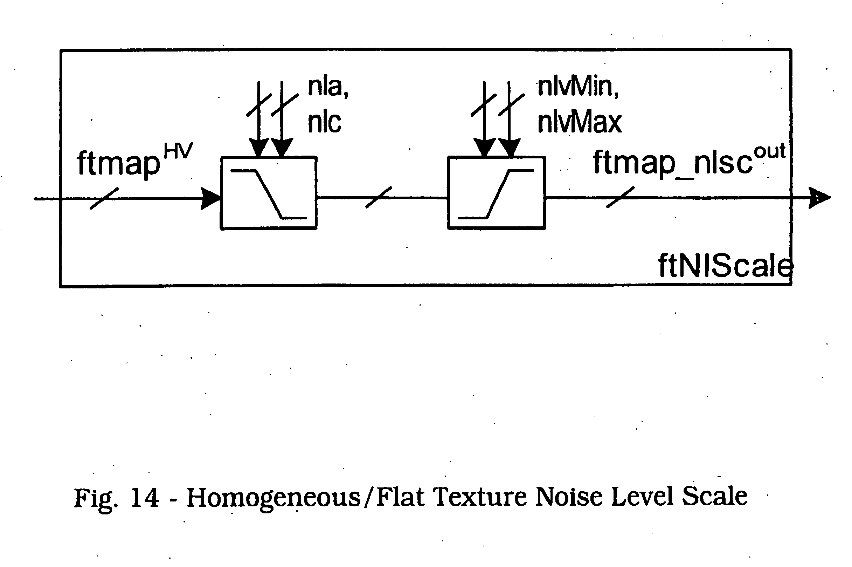

This process/module has two basic functions as depictured in Fig. 14.

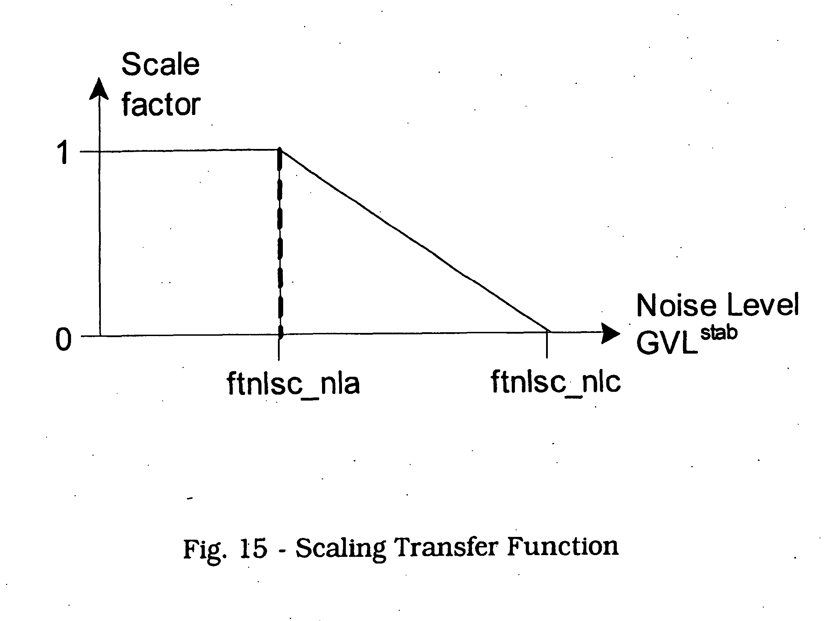

The first function is to scale the maximum value of the FT map down with increasing noise level. The downscaling is currently implemented with a linear approach. If the noise level (GVLstab) is below ftnlsc_nla, no scaling of the FT map is applied. If the noise level (GVLstab) is higher than ftnlsc_nlc, the FT map is set to zero. This applies a graceful degradation of the sharpness enhancer SRC with high noise levels. The scaling transfer function looks as shown in Fig. 15.

The second function is to avoid wrong results with pictures, which contain only texture. Such pictures produce very high variances because there are no flat blocks for variance measurement in the gvlCandidates block available. This effect increases with high sharpness and contrast. This may result in a FT map, which is indicating a completely flat picture although it is completely textured.

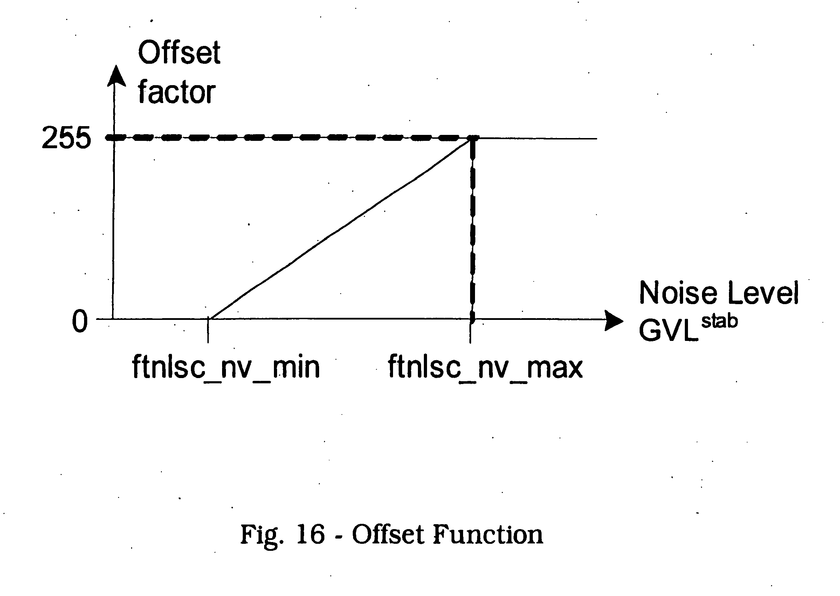

A countermeasure for this problem is, to add a linearly increasing offset, if the noise level (GVLstab) exceeds a certain threshold ftnlsc_nv_min, which indicates that this high variance level might not result from noise in a flat area. The offset is increasing linearly up to the maximum value 255 when the measured noise level is surely not stemming from noise in a flat area but from a high contrast textured picture. The transfer function for the offset function looks as shown in Fig. 16.

The specific processing or algorithmic steps are as follows:

1. Calculate the linear transfer function for the filter curve from ftnlsc_nla, ftnlsc_nlc.

2. Calculate the scaling factor for the actual picture.

3. Scale the input FT map globally with this factor and output it.

4. Calculate the linear transfer function in a similar way for ftnlsc_nv_min, ft_nv_max and add the appropriate offset to the ftmap value.

Implementation notes:

1. The transfer functions may be implemented as look up table since the ftnlsc_nla, ftnlsc_nlc, ftnlsc_nv_min and ftnlsc_nv_max are set only once.

2. The parameters ftnlsc_nla and ftnlsc_nlc are set per default to 70 and 218.

3. Values of ftnlsc_nv_min and ftnlsc_nv_max are currently set to 512 and 1024.

Homogeneous/Flat Texture Final Linear Scale - ftMapScale

| Input: | Noise adaptive scaled flat vs. texture map ftmap_nlscout to the enhancer component. |

(continued)

| Parameters: | ftmap_scale_gain - FT map scaling gain factor |
| | ftmap_scale_offset - FT map scaling offset factor |
| Output: | Final scaled flat vs. texture map ftmapout to the enhancer component. |

Process / Algorithm:

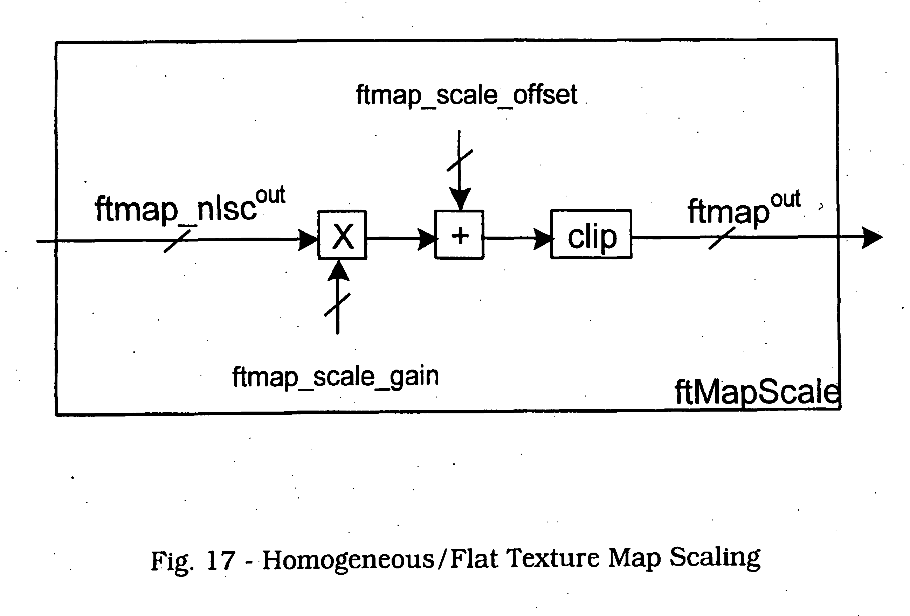

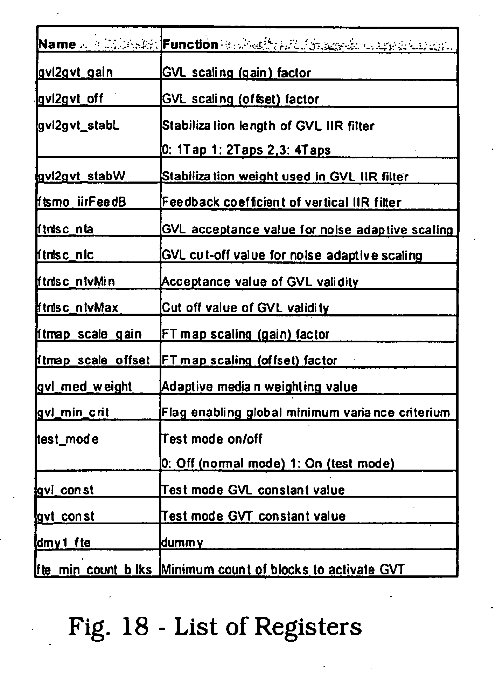

This block is doing a final linear scaling of the FT map regarding the incoming two parameters scale_gain & scale_offset and is described by Fig. 17.

Implementation notes:

The default setting are ftmap_scale_gain = 1 and ftmap_scale_offset = 0 so there is no change of FT map.

**Reference Symbols**

| **Bjk** | Block of an image, frame, picture |
| **HTDD** | Homogeneous-texture discrimination data |
| **HTDM** | Homogeneous-texture discrimination map |
| **I** | Image, frame, picture |
| **ID** | Digital image data |
| **inD** | Input data |
| **IR** | Image region |
| **outD** | Output data |
| **HR** | Homogeneous/flat image region |
| **TR** | Texture/textured image region |
| **T** | Threshold value |
| **V, Vo** | Global/overall variance/variance value |
| **Vx** | Local variance/variance value (for block or class of blocks) |

**Claims**

1.  Method for discriminating texture regions TR and flat regions FR in an image comprising:

    dividing the image into blocks of pixels,
    dividing each block into a plurality of pixel-groups (A, B, C, D, ...) arranged in a sub-sampling raster,
    calculating the following variance values a for each block:

    - the overall variance $\sigma_{tot}$ for all pixels within the block,
    - the sub-variances ($\sigma_A$, $\sigma_B$, $\sigma_C$, $\sigma_D$, ...) for the pixels of each pixel group,
    - the variance $\sigma_{var}$ of the sub-variances and the overall variance,

    determining a predetermined number of smallest values $\sigma_{var}$ of all blocks,
    generating an array of the values $\sigma_{tot}$ of the respective blocks corresponding to the determined smallest values $\sigma_{var}$,
    selecting one of the values $\sigma_{tot}$ from the array of variance values as a Global Variance Level GVL,
    determining a Global Threshold Value GVT based on the Global Variance Level GVL,
    calculating a local variance level $\sigma_{loc}$ for each pixel and
    generating a map comprising homogeneous-texture discrimination data HTDD indicating texture regions TR and flat regions FR within the image from a comparison of GVT and $\sigma_{loc}$.

2.  A method according to claim 1, wherein the predetermined number of smallest values $\sigma_{var}$ is five.

3. A method according to one of claims 1 to 2, wherein
dividing each block into a plurality of pixel-groups comprises dividing into four groups A, B, C and D.

4. Method according to one of claims 1 to 3, wherein the selecting of the Global Variance Level GVL comprises
calculating the smallest value $\sigma_{totmin}$ of the array of variance values,
calculating a median $\sigma_{totmed}$ of the values of the array of variance values,
calculating distances $\delta$ for each element of the array of variance values to $\sigma_{totmed}$.
determining the maximum $\delta_{max}$ of all distances $\delta$,
wherein
GVL is $\sigma_{totmed}$ if $\delta_{max}$, is smaller than (gvl_med_weight x $\sigma_{totmed}$) and
GVL is $\sigma_{totmin}$ if $\delta_{max}$ is larger than (gvl_med_weight x $\sigma_{totmed}$)
with gvl_med_weight being a constant value.

5. Method according to one of claims 1 to 4, wherein calculating the local variance level $\sigma_{loc}$ for a pixel comprises
calculating the variance for all pixels within a block of 5x5 pixels around the pixel centered in the block.

6. Method according to one of claims 1 to 5, wherein generating the map indicating texture regions TR and flat regions FR comprises
binarily deciding between TR and FR according to a comparison of $\sigma_{loc}$ and GVT.

7. Method according to one of claims 1 to 6, wherein the calculating of variances $\sigma$ is performed according to the equation

$$\sigma = \frac{1}{N} * \sum \left( x(i) - \mu \right)^2$$

for all pixels x(i) in a block, where N is the number of pixels in the block and $\mu$ describes the pixel average in the block.

8. Method according to one of claims 1 to 6, wherein the calculating of variances $\sigma$ is performed according to the equation

$$\sigma = \frac{1}{N} * \sum \left| x(i) - \mu \right|$$

for all pixels x(i) in a block, where N is the number of pixels in the block and $\mu$ describes the pixel average in the block.

9. Method according to one of claims 1 to 8, wherein the homogeneous-texture-discrimination data HTDD are cleaned in order to improve its homogeneity to thereby avoid side effects.

10. Method according to claim 9, wherein in said cleaning process small spots within homogeneous sections are removed.

11. Method according to one of claims 1 to 10, further comprising
comprising a homogeneous texture smoothing process with respect to said homogeneous-texture-discrimination data HTDD,
which is adapted in order to smoothen transitions in said homogeneous-texture-discrimination data HTDD.

12. Method according to claim 11, wherein a vertical IIR filter is used in the homogeneous-texture smoothing process.

13. Method according to claim 11 or 12, wherein a low pass filtering process is used for the homogeneous-texture-smoothing process.

14. Method according to one of claims 1 to 13, comprising a homogeneous-texture noise level scale process.

15. Method according to one of claims 1 to 14, comprising a homogeneous-texture linear scale process in order to provide optimization parameters, in particular for an overall system adjustment.

16. Device for discriminating texture regions TR and flat regions FR in an image comprising means configured to carry out the method according to one of claims 1 to 15.

17. Computer program product comprising computer program means which are configured to carry out the method according to one of claims 1 to 15.

18. Computer readable storage medium comprising a computer program product according to claim 17.

**Patentansprüche**

1. Verfahren zum Unterscheiden von Texturbereichen TR und ebenen Bereichen FR in einem Bild, das enthält:

   Unterteilen des Bildes in Blöcke aus Pixeln,
   Unterteilen jedes Blocks in mehrere Pixelgruppen (A, B, C, D, ...), die in einem Unterabtastraster angeordnet sind,
   Berechnen der folgenden Varianzwerte $\sigma$ für jeden Block:

   - die Gesamtvarianz $\sigma_{tot}$ für alle Pixel in dem Block,
   - die Untervarianzen ($\sigma_A$, $\sigma_B$, $\sigma_C$, $\sigma_D$ ...) für die Pixel jeder Pixelgruppe,
   - die Varianz ($\sigma_{var}$) der Untervarianzen und der Gesamtvarianz,

   Bestimmen einer vorgegebenen Anzahl kleinster Werte $\sigma_{var}$ aller Blöcke,
   Erzeugen einer Anordnung der Werte $\sigma_{tot}$ der jeweiligen Blöcke, die den bestimmten kleinsten Werten $\sigma_{var}$ entsprechen,
   Auswählen eines der Werte $\sigma_{tot}$ aus der Anordnung von Varianzwerten als einen globalen Varianzpegel GVL,
   Bestimmen eines globalen Schwellenwertes GVT auf der Grundlage des globalen Varianzpegels GVL,
   Berechnen eines lokalen Varianzpegels $\sigma_{loc}$ für jedes Pixel und
   Erzeugen eines Kennfeldes, das die Homogen/Textur-Unterscheidungsdaten HTDD enthält, die Texturbereiche TR und ebene Bereiche FR in dem Bild angeben, anhand des Vergleichs von GVT und $\sigma_{loc}$.

2. Verfahren nach Anspruch 1, wobei die vorgegebene Anzahl kleinster Werte $\sigma_{var}$ gleich fünf ist.

3. Verfahren nach einem der Ansprüche 1 bis 2, wobei
   das Unterteilen jedes Blocks in mehrere Pixelgruppen das Unterteilen in vier Gruppen A, B, C und D enthält.

4. Verfahren nach einem der Ansprüche 1 bis 3, wobei das Auswählen des globalen Varianzpegels GVL enthält:

   Berechnen des kleinsten Wertes $\sigma_{totmin}$ der Anordnung von Varianzwerten,
   Berechnen eines Medianwerts $\sigma_{totmed}$ der Werte der Anordnung von Varianzwerten,
   Berechnen von Abständen $\delta$ jedes Elements der Anordnung von Varianzwerten zu $\sigma_{totmed}$,
   Bestimmen des Maximums $\delta_{max}$ aller Abstände $\delta$,
   wobei
   GVL gleich $\sigma_{totmed}$ ist, falls $\delta_{max}$ kleiner ist als (gvl_med_weight $\times$ $\sigma_{totmed}$), und
   GVL gleich $\sigma_{totmin}$ ist, falls $\delta_{max}$ größer ist als (gvl_med_weight $\times$ $\sigma_{totmed}$),
   wobei gvl_med_weight ein konstanter Wert ist.

5. Verfahren nach einem der Ansprüche 1 bis 4, wobei das Berechnen des lokalen Varianzpegels $\sigma_{loc}$ für ein Pixel enthält:

   Berechnen der Varianz für alle Pixel in einem Block aus $5 \times 5$ Pixeln um das im Block zentrierte Pixel.

6. Verfahren nach einem der Ansprüche 1 bis 5, wobei das Erzeugen des Kennfeldes, das Texturbereiche TR und ebene Bereiche FR angibt, enthält:

   binäres Entscheiden zwischen TR und FR in Übereinstimmung mit einem Vergleich von $\sigma_{loc}$ und GVT.

7. Verfahren nach einem der Ansprüche 1 bis 6, wobei das Berechnen von Varianzen $\sigma$ gemäß der folgende Gleichung

$$\sigma = \frac{1}{N} * \sum \left( x(i) - \mu \right)^2$$

für alle Pixel x(i) in einem Block ausgeführt wird, wobei N die Anzahl von Pixeln in dem Block ist und $\mu$ den Pixeldurchschnitt im Block beschreibt.

8. Verfahren nach einem der Ansprüche 1 bis 6, wobei das Berechnen von Varianzen $\sigma$ gemäß der folgenden Gleichung

$$\sigma = \frac{1}{N} * \sum \left| x(i) - \mu \right|$$

für alle Pixel x(i) in einem Block ausgeführt wird, wobei N die Anzahl von Pixeln in dem Block ist und $\mu$ den Pixeldurchschnitt im Block beschreibt.

9. Verfahren nach einem der Ansprüche 1 bis 8, wobei die Homogen/Textur-Unterscheidungsdaten HTDD gereinigt werden, um ihre Homogenität zu verbessern, um dadurch Nebeneffekte zu vermeiden.

10. Verfahren nach Anspruch 9, wobei in dem Reinigungsprozess kleine Flecken in homogenen Abschnitten entfernt werden.

11. Verfahren nach einem der Ansprüche 1 bis 10, das ferner enthält:

Aufnehmen eines Homogen/Textur-Glättungsprozesses in Bezug auf die Homogen/Textur-Unterscheidungsdaten HTDD,
der dazu ausgelegt ist, Übergänge in den Homogen/Textur-Unterscheidungsdaten HTDD zu glätten.

12. Verfahren nach Anspruch 11, wobei in dem Homogen/Textur-Glättungsprozess ein vertikales IIR-Filter verwendet wird.

13. Verfahren nach Anspruch 11 oder 12, wobei für den Homogen/Textur-Glättungsprozess ein Tiefpassfilterungsprozess verwendet wird.

14. Verfahren nach einem der Ansprüche 1 bis 13, das einen Homogen/Textur-Rauschpegelskalierungsprozess enthält.

15. Verfahren nach einem der Ansprüche 1 bis 14, das einen homogen/Textur-Linearskalierungsprozess enthält, um Optimierungsparameter insbesondere für eine gesamte Systemanpassung zu schaffen.

16. Vorrichtung zum Unterscheiden von Texturbereichen TR und ebenen Bereichen FR in einem Bild, die Mittel enthält, die konfiguriert sind, um das Verfahren nach einem der Ansprüche 1 bis 15 auszuführen.

17. Computerprogrammprodukt, das Computerprogrammmittel enthält, die konfiguriert sind, um das Verfahren nach einem der Ansprüche 1 bis 15 auszuführen.

18. Computerlesbares Speichermedium, das ein Computerprogrammprodukt nach Anspruch 17 enthält.

**Revendications**

1. Procédé de discrimination de régions texturées TR et de régions plates FR dans une image comportant :

la division de l'image en blocs de pixels,
la division de chaque bloc en une pluralité de groupes de pixels (A, B, C, D, ...) disposés en un maillage de sous-échantillonnage,
le calcul des valeurs de variance $\sigma$ suivantes pour chaque bloc :

- la variance globale $\sigma_{tot}$ pour tous les pixels dans le bloc,
- les sous-variances ($\sigma_A$, $\sigma_B$, $\sigma_C$, $\sigma_D$, ...) pour les pixels de chaque groupe de pixels,
- la variance $\sigma_{var}$ des sous-variances et de la variance globale,

la détermination d'un nombre prédéterminé des plus petites valeurs $\sigma_{var}$ de tous les blocs,
la génération d'un réseau des valeurs $\sigma_{tot}$ des blocs respectifs correspondant aux plus petites valeurs $\sigma_{var}$ déterminées,
la sélection d'une des valeurs $\sigma_{tot}$ depuis le réseau de valeurs de variance en tant que niveau de variance global GVL,
la détermination d'une valeur de seuil globale GVT en fonction du niveau de variance global GVL,
le calcul d'un niveau de variance local $\sigma_{loc}$ pour chaque pixel et
la génération d'une carte comportant des données de discrimination de texture homogène HTDD indiquant les régions texturées TR et les régions plates FR dans l'image à partir d'une comparaison entre GVT et $\sigma_{loc}$.

2. Procédé selon la revendication 1, dans lequel le nombre prédéterminé des plus petites valeurs $\sigma_{var}$ est cinq.

3. Procédé selon l'une des revendications 1 à 2, dans lequel
la division de chaque bloc en une pluralité de groupes de pixels comporte la division en quatre groupes A, B, C, et D.

4. Procédé selon l'une des revendications 1 à 3, dans lequel la sélection du niveau de variance global GVL comporte
le calcul de la plus petite valeur $\sigma_{totmin}$ du réseau de valeur de variances,
le calcul d'une moyenne $\sigma_{totmed}$ des valeurs du réseau de valeurs de variance,
le calcul des distances $\delta$ pour chaque élément du réseau de valeurs de variance par rapport à $\sigma_{totmed}$,
la détermination du maximum $\delta_{max}$ de toutes les distances $\delta$,
dans lequel
GVL est $\sigma_{totmed}$ si $\delta_{max}$ est plus petit que (gvl_med_poids x $\sigma_{totmed}$) et
GVL est $\sigma_{totmin}$ si $\delta_{max}$ est supérieur à (gvl_med_poids x $\sigma_{totmed}$)
gvl_med_poids étant une constante.

5. Procédé selon l'une des revendications 1 à 4, dans lequel le calcul du niveau de variance local $\sigma_{loc}$ pour un pixel comporte
le calcul de la variance pour tous les pixels à l'intérieur d'un bloc de 5x5 pixels autour du pixel central dans le bloc.

6. Procédé selon l'une des revendications 1 à 5, dans lequel la génération de la carte indiquant les régions texturées TR et les régions plates FR comporte
une décision binaire entre TR et FR selon une comparaison entre $\sigma_{loc}$ et GVT.

7. Procédé selon l'une des revendications 1 à 6, dans lequel le calcul des variances $\sigma$ est effectué conformément à l'équation

$$\sigma = \frac{1}{N} * \sum \left( x(i) - \mu \right)^2$$

pour tous les pixels x(i) dans un bloc, où N est le nombre de pixels dans le bloc et $\mu$ désigne la moyenne de pixels dans le bloc.

8. Procédé selon l'une des revendications 1 à 6, dans lequel le calcul de variance $\sigma$ est effectué conformément à l'équation

$$\sigma = \frac{1}{N} * \sum \left| x(i) - \mu \right|$$

pour tous les pixels x(i) dans un bloc, où N est le nombre de pixels dans le bloc et μ désigne la moyenne de pixels dans le bloc.

9. Procédé selon l'une des revendications 1 à 8, dans lequel les données de discrimination de texture homogène HTDD sont nettoyées afin d'améliorer leur homogénéité pour ainsi éviter les effets indésirables.

10. Procédé selon la revendication 9, dans lequel de petites tâches à l'intérieur des sections homogènes sont supprimées au cours dudit processus de nettoyage.

11. Procédé selon l'une des revendications 1 à 10, comportant en outre
un processus de lissage de texture homogène concernant lesdites données de discrimination de texture homogène HTDD,
qui est adapté afin de lisser les transitions dans lesdites données de discrimination de texture homogène HTDD.

12. Procédé selon la revendication 11, dans lequel un filtre IIR vertical est utilisé dans le processus de lissage de texture homogène.

13. Procédé selon la revendication 11 ou 12, dans lequel un processus de filtrage passe bas est utilisé pour le processus de lissage de texture homogène.

14. Procédé selon l'une des revendications 1 à 13, comportant un processus d'échelonnage de niveau de bruit de texture homogène.

15. Procédé selon l'une des revendications 1 à 14, comportant un processus d'échelonnage linéaire de texture homogène afin de délivrer des paramètres d'optimisation, en particulier pour un réglage de l'ensemble du système.

16. Dispositif de discrimination entre des régions texturées TR et des régions plates FR dans une image comportant un moyen configuré pour mettre en oeuvre le procédé selon l'une des revendications 1 à 15.

17. Produit de programme informatique comportant un moyen de programme informatique qui est configuré pour mettre en oeuvre le procédé selon l'une des revendications 1 à 15.

18. Support de stockage pouvant être lu par un ordinateur comportant un produit de programme informatique selon la revendication 17.

```
┌─────────────────────────────┐
│  Provide Digital Image Data ID/  │   ~S1
│  Image I as Input Data inD       │
└─────────────────────────────┘
```

Start/Init

S0

```
┌─────────────────────────────┐
│          Subdivide               │   ~S2
│  Image I/Digital Image Data ID   │
│    into Blocks Bjk of Pixels     │
└─────────────────────────────┘
```

```
┌─────────────────────────────┐
│            Derive                │   ~S3
│  Global Variance/Local Variance  │
│             V, Vx                │
└─────────────────────────────┘
```

```
┌─────────────────────────────┐
│      Classify Blocks Bjk as      │   ~S4
│   Homogeneous or Textured        │
│     Image Regions HR, TR         │
└─────────────────────────────┘
```

```
┌─────────────────────────────┐
│   Derive Homogeneous-            │   ~S5
│   Texture Discrimination         │
│   Data/Map HTDD/HTDM             │
└─────────────────────────────┘
```

S6

S7

```
┌─────────────────────────────┐
│   Provide Homogeneous-           │
│   Texture Discrimination         │
│   Data/Map HTDD/HTDM as          │
│   Output Data outD               │
└─────────────────────────────┘
```

End

## Fig. 1 - General Processing Scheme

Fig. 2 - Overview

EP 1 840 823 B1

gvl_min_crit

lum

gvlCandidates

gvl_med_weight
test_mode
gvl_const

gvlSelect

gvl2gvt_gain
gvl2gvt_off
gvl2gvt_stabL
gvl2gvt_stabW
test_mode
gvt_const

gvl2gvt

ftnlsc_nla
ftnlsc_nlc
ftnlsc_nlvMin
ftnlsc_nlvMax

ftmap_scale_gain
ftmap_scale_offset

$GVL^{stab}$

GVT

localVariance

ftDiscriminate

ftCleaning

ftSmoothing

ftNlScale

ftMapScale

FT map

ftsmo_iirFeedB

Fig. 3 - Processing Scheme

Fig. 4 - Global Variance Level Candidate Generation

Fig. 5 - Sub-Sampling Arrangement

Fig. 6 - Global Varinace Level Selection

EP 1 840 823 B1

Fig. 7 - Global Variance Level to Global Variance Threshold Conversion

Fig. 8 - Local Varinace Determination

Fig. 9 - Homogeneous/Flat Texture Discrimination

EP 1 840 823 B1

EP 1 840 823 B1

ftmap → med$_{5H}$ → med$_{5V}$ → erosion$_{5x5}$ → ftmap$^d$

ftCleaning

Fig. 10 - Homogeneous/Flat Texture Cleaning

A
B

1. med$_{5H}$: 5x1

2. med$_{5H}$: 5x1

...

6. med$_{5H}$: 1x5

5x5 structure
Element

Fig. 11 - Erosion Process

EP 1 840 823 B1

Fig. 12 - Homogeneous/Flat Texture Smoothing

Fig. 13 - IIR Filter

Fig. 14 - Homogeneous/Flat Texture Noise Level Scale

Scale factor

1

0

ftnlsc_nla

ftnlsc_nlc

Noise Level GVL$^{stab}$

Fig. 15 - Scaling Transfer Function

Fig. 16 - Offset Function

Fig. 17 - Homogeneous/Flat Texture Map Scaling

| Name | Function |
|---|---|
| gvl2gvt_gain | GVL scaling (gain) factor |
| gvl2gvt_off | GVL scaling (offset) factor |
| gvl2gvt_stabL | Stabilization length of GVL IIR filter<br>0: 1Tap 1: 2Taps 2,3: 4Taps |
| gvl2gvt_stabW | Stabilization weight used in GVL IIR filter |
| ftsmo_iirFeedB | Feedback coefficient of vertical IIR filter |
| ftnlsc_nla | GVL acceptance value for noise adaptive scaling |
| ftnlsc_nlc | GVL cut-off value for noise adaptive scaling |
| ftnlsc_nlvMin | Acceptance value of GVL validity |
| ftnlsc_nlvMax | Cut off value of GVL validity |
| ftmap_scale_gain | FT map scaling (gain) factor |
| ftmap_scale_offset | FT map scaling (offset) factor |
| gvl_med_weight | Adaptive median weighting value |
| gvl_min_crit | Flag enabling global minimum variance criterium |
| test_mode | Test mode on/off<br>0: Off (normal mode) 1: On (test mode) |
| gvl_const | Test mode GVL constant value |
| gvt_const | Test mode GVT constant value |
| dmy1_fte | dummy |
| fte_min_count_blks | Minimum count of blocks to activate GVT |

## Fig. 18 - List of Registers

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6771793 B1

- US 20040120597 A1

**Non-patent literature cited in the description**

- Automatic noise estimation from the multi resolution support. *Publications of the Astronomical Society of the Pacific University of Chicago,* February 1998, vol. 110 (744), 193-199
- A fast parallel algorithm for blind estimation of noise variance. *IEEE Transactions on Pattern Analysis and Meshing Intelligence,* February 1990, vol. 12 (2), 216-223

- Reliable and fast structure-oriented video noise estimation. *Proceedings 2002. International Conference on Image Processing,* September 2002, vol. 2, 840-843
- Block-based noise estimation using adaptive Gaussian filtering. *International Conference on Las Vegas,* January 2005, 263-264